# EUROPEAN PATENT APPLICATION

(11) **EP 4 518 474 A1**
(43) Date of publication of application: **05.03.2025**
(21) Application number: 22938893.9
(22) Date of filing: 25.04.2022
(51) Int. Cl.: H04W 72/04, H04W 74/08

(54) **RANDOM ACCESS METHOD, APPARATUS AND DEVICE, AND STORAGE MEDIUM**

(71) Applicant: Beijing Xiaomi Mobile Software Co., Ltd., Beijing 100085 (CN)
(72) Inventor: MU, Qin, Beijing 100085 (CN)
(74) Representative: Dehns Germany Partnerschaft mbB
(86) International application number: PCT/CN2022/089104
(87) International publication number: WO 2023/206036

(57) **Abstract**

The present disclosure relates to a random access method, which may comprise: determining configuration information, wherein the configuration information is used for determining an initial downlink bandwidth part (BWP) configured for a terminal, and is used for determining whether the initial downlink BWP supports the terminal in performing random access in a connected state. A corresponding BWP is configured for a terminal, such that the terminal can perform a corresponding random access operation according to the configured BWP, thereby avoiding a communication failure.

## Description

### TECHNICAL FIELD

The present disclosure relates to the field of communication technologies and in particular to random access methods, apparatuses and devices, and storage mediums.

### BACKGROUND

In the related arts, a new terminal type is proposed in 5G new radio (NR) to satisfy the requirements of the Internet of Things (IoT) terminal devices. In the current 3rd generation partnership project (3GPP) standardization, this new terminal type is called a reduced capability (RedCap) terminal and sometimes also called Reduced capability user equipment (UE) or RedCap terminal or shortened as NR-lite. The RedCap terminals are relative to the ordinary terminals.

Considering terminal bandwidth limitation, time division duplexing (TDD) center frequency-alignment, synchronization signal and physical broadcast channel (PBCH) block (SSB) overhead and other factors, it is required to configure a separate initial Bandwidth Part (BWP) for the RedCap terminal. The Initial BWP includes an Initial downlink bandwidth part (Initial DL BWP) and/or an Initial uplink bandwidth part (Initial UL BWP).

In some cases, the RedCap terminal may switch to the initial uplink BWP and/or the initial downlink BWP separately configured for the RedCap terminal so as to perform random access. However, for RedCap terminals in a connected state, because a random access channel (RACH) is triggered, some RedCap terminals may have problems with transmitting exclusive information when switching to the initial downlink BWP, leading to communication anomaly.

### SUMMARY

The present disclosure provides random access methods, apparatuses and devices, and storage mediums to overcome problems in the related art.

According to a first aspect of the embodiments of the present disclosure, there is provided a random access method, performed by a network device and including: determining configuration information, where the configuration information is configured to determine an initial downlink bandwidth part (BWP) configured for a terminal, and determine whether the initial downlink BWP supports random access for the terminal in a connected state.

In an embodiment, the initial downlink BWP supports random access for the terminal in the connected state.

In an embodiment, the initial downlink BWP is configured with a synchronization signal and physical broadcast channel (PBCH) block (SSB).

In an embodiment, the initial downlink BWP includes a common search space for the random access and at least one other common search space, and the at least one other common search space is different from the common search space for the random access.

In an embodiment, a center frequency of the initial downlink BWP is consistent with a center frequency of an initial uplink BWP configured for the terminal.

In an embodiment, the method further includes: by using the initial downlink BWP, transmitting exclusive information for the terminal.

In an embodiment, the configuration information is further configured to determine that the initial downlink BWP is not configured to transmit the exclusive information for the terminal.

In an embodiment, the initial downlink BWP does not include the SSB.

In an embodiment, the initial downlink BWP does not support random access for the terminal in the connected state.

In an embodiment, the initial downlink BWP does not include the SSB.

In an embodiment, the center frequency of the initial downlink BWP is not consistent with the center frequency of the initial uplink BWP configured for the terminal.

In an embodiment, the configuration information is further configured to determine an active BWP configured for the terminal, and the active BWP includes a random access resource to perform the random access for the terminal.

In an embodiment, the active BWP is different from the initial downlink BWP.

According to a second aspect of the embodiments of the present disclosure, there is provided a random access method, performed by a terminal and including: determining configuration information, where the configuration information is configured to determine an initial downlink bandwidth part (BWP) configured for the terminal, and determine whether the initial downlink BWP supports random access for the terminal in a connected state; and based on the configuration information, performing random access.

In an embodiment, the initial downlink BWP supports random access for the terminal in the connected state; where based on the configuration information, performing the random access includes: by using the initial downlink BWP, performing the random access.

In an embodiment, the initial downlink BWP is configured with a synchronization signal and physical broadcast channel (PBCH) block (SSB).

In an embodiment, the initial downlink BWP includes a common search space for the random access and at least one other common search space, and the at least one other common search space is different from the common search space for the random access.

In an embodiment, a center frequency of the initial downlink BWP is consistent with a center frequency of an initial uplink BWP configured for the terminal.

In an embodiment, the method further includes: by using the initial downlink BWP, receiving exclusive information for the terminal.

In an embodiment, the configuration information is further configured to determine the initial downlink BWP is not configured to transmit the exclusive information for the terminal.

In an embodiment, the initial downlink BWP does not include the SSB.

In an embodiment, the method further includes: stopping receiving the exclusive information for the terminal by using the initial downlink BWP.

In an embodiment, the initial downlink BWP does not support random access for the terminal in the connected state; based on the configuration information, performing the random access includes: stopping performing random access by using the initial downlink BWP.

In an embodiment, the initial downlink BWP does not include the SSB.

In an embodiment, the center frequency of the initial downlink BWP is not consistent with the center frequency of the initial uplink BWP configured for the terminal.

In an embodiment, the configuration information is further configured to determine an active BWP configured for the terminal, and the active BWP includes a random access resource to perform the random access for the terminal.

In an embodiment, the active BWP is different from the initial downlink BWP; where based on the configuration information, performing the random access further includes: by using the active BWP, performing the random access.

According to a third aspect of the embodiments of the present disclosure, there is provided a random access apparatus, including: a determination module, configured to determine configuration information, where the configuration information is configured to determine an initial downlink bandwidth part (BWP) configured for a terminal, and determine whether the initial downlink BWP supports random access for the terminal in a connected state.

In an embodiment, the initial downlink BWP supports random access for the terminal in the connected state.

In an embodiment, the initial downlink BWP is configured with a synchronization signal and physical broadcast channel (PBCH) block (SSB).

In an embodiment, the initial downlink BWP includes a common search space for the random access and at least one other common search space, and the at least one other common search space is different from the common search space for the random access.

In an embodiment, a center frequency of the initial downlink BWP is consistent with a center frequency of an initial uplink BWP configured for the terminal.

In an embodiment, the apparatus further includes: a transmitting module, configured to, by using the initial downlink BWP, transmit exclusive information for the terminal.

In an embodiment, the configuration information is further configured to determine that the initial downlink BWP is not configured to transmit the exclusive information for the terminal.

In an embodiment, the initial downlink BWP does not include the SSB.

In an embodiment, the initial downlink BWP does not support random access for the terminal in the connected state.

In an embodiment, the initial downlink BWP does not include the SSB.

In an embodiment, the center frequency of the initial downlink BWP is not consistent with the center frequency of the initial uplink BWP configured for the terminal.

In an embodiment, the configuration information is further configured to determine an active BWP configured for the terminal, and the active BWP includes a random access resource to perform the random access for the terminal.

In an embodiment, the active BWP is different from the initial downlink BWP.

According to a fourth aspect of the embodiments of the present disclosure, there is provided a random access apparatus, including: a determination module, configured to determine configuration information, where the configuration information is configured to determine an initial downlink bandwidth part (BWP) configured for the terminal, and determine whether the initial downlink BWP supports random access for the terminal in a connected state; and an accessing module, configured to, based on the configuration information, perform random access.

In an embodiment, the initial downlink BWP supports random access for the terminal in the connected state; where the accessing module is further configured to: by using the initial downlink BWP, perform the random access.

In an embodiment, the initial downlink BWP is configured with a synchronization signal and physical broadcast channel (PBCH) block (SSB).

In an embodiment, the initial downlink BWP includes a common search space for the random access and at least one other common search space, and the at least one other common search space is different from the common search space for the random access.

In an embodiment, a center frequency of the initial downlink BWP is consistent with a center frequency of an initial uplink BWP configured for the terminal.

In an embodiment, the apparatus further includes a receiving module, configured to: by using the initial downlink BWP, receive exclusive information for the terminal.

In an embodiment, the configuration information is further configured to determine the initial downlink BWP is not configured to transmit the exclusive information for the terminal.

In an embodiment, the initial downlink BWP does not include the SSB.

In an embodiment, the apparatus further includes a receiving module, configured to: stop receiving the exclusive information for the terminal by using the initial downlink BWP.

In an embodiment, the initial downlink BWP does not support random access for the terminal in the connected state; where the accessing module is further configured to: stop performing random access by using the initial downlink BWP.

In an embodiment, the initial downlink BWP does not include the SSB.

In an embodiment, the center frequency of the initial downlink BWP is not consistent with the center frequency of the initial uplink BWP configured for the terminal.

In an embodiment, the configuration information is further configured to determine an active BWP configured for the terminal, and the active BWP includes a random access resource to perform the random access for the terminal.

In an embodiment, the active BWP is different from the initial downlink BWP; where the accessing module is further configured to: by using the active BWP, perform the random access.

According to a fifth aspect of the embodiments of the present disclosure, there is provided a random access device, including: a processor; and a memory storing instructions executable by the processor; where the instructions, when executed by the processor, cause the processor to perform the random access method of any one of the embodiments of the first aspect.

According to a sixth aspect of the embodiments of the present disclosure, there is provided a random access device, including: a processor; and a memory storing instructions executable by the processor; where the instructions, when executed by the processor, cause the processor to perform the random access method of any one of the embodiments of the second aspect.

According to a seventh aspect of the embodiments of the present disclosure, there is provided a non-transitory computer readable storage medium, storing instructions thereon, where the instructions, when executed by a processor of a network device, cause the processor to perform the random access method of any one of the embodiments of the first aspect.

According to an eighth aspect of the embodiments of the present disclosure, there is provided a non-transitory computer readable storage medium, storing instructions thereon, where the instructions, when executed by a processor of a mobile terminal, cause the processor to perform the random access method of any one of the embodiments of the second aspect.

The technical solutions provided by the embodiments of the present disclosure may include the following beneficial effects: configuration information for determining an initial downlink BWP configured for a terminal is configured to determine whether the initial downlink BWP supports random access for the terminal in the connected state such that the terminal can perform corresponding random access operation based on the configured BWP, avoiding communication failure.

It will be understood that the above general descriptions and subsequent detailed descriptions are only illustrative and explanatory rather than limiting of the present disclosure.

### BRIEF DESCRIPTION OF THE DRAWINGS

The drawings herein incorporated in and constituting a part of the specification illustrate embodiments consistent with the present disclosure and together with the specification, serve to interpret the principle of the present disclosure.
FIG. 1 is a schematic diagram illustrating a wireless communication system according to an embodiment of the present disclosure.
FIG. 2 is a flowchart illustrating a random access method according to an embodiment of the present disclosure.
FIG. 3 is a flowchart illustrating a random access method according to another embodiment of the present disclosure.
FIG. 4 is a flowchart illustrating a random access method according to yet another embodiment of the present disclosure.
FIG. 5 is a flowchart illustrating a random access method according to still another embodiment of the present disclosure.
FIG. 6 is a flowchart illustrating a random access method according to still anther embodiment of the present disclosure.
FIG. 7 is a flowchart illustrating a random access method according to still another embodiment of the present disclosure.
FIG. 8 is a flowchart illustrating a random access method according to still another embodiment of the present disclosure.
FIG. 9 is a flowchart illustrating a random access method according to still another embodiment of the present disclosure.
FIG. 10 is a flowchart illustrating a random access method according to still another embodiment of the present disclosure.
FIG. 11 is a flowchart illustrating a random access method according to still another embodiment of the present disclosure.
FIG. 12 is a schematic diagram illustrating a random access apparatus according to an embodiment of the present disclosure.
FIG. 13 is a schematic diagram illustrating a random access apparatus according to another embodiment of the present disclosure.
FIG. 14 is a schematic diagram illustrating a random access device according to an embodiment of the present disclosure.
FIG. 15 is a schematic diagram illustrating another random access device according to another embodiment of the present disclosure.

### DETAILED DESCRIPTION OF THE EMBODIMENTS

Examples will be described in detail herein, with the illustrations thereof represented in the drawings. Where the following description relates to the drawings, unless otherwise indicated, the same numerals in different drawings represent the same or similar elements. The embodiments described in the following exemplary embodiments do not represent all embodiments consistent with the present disclosure.

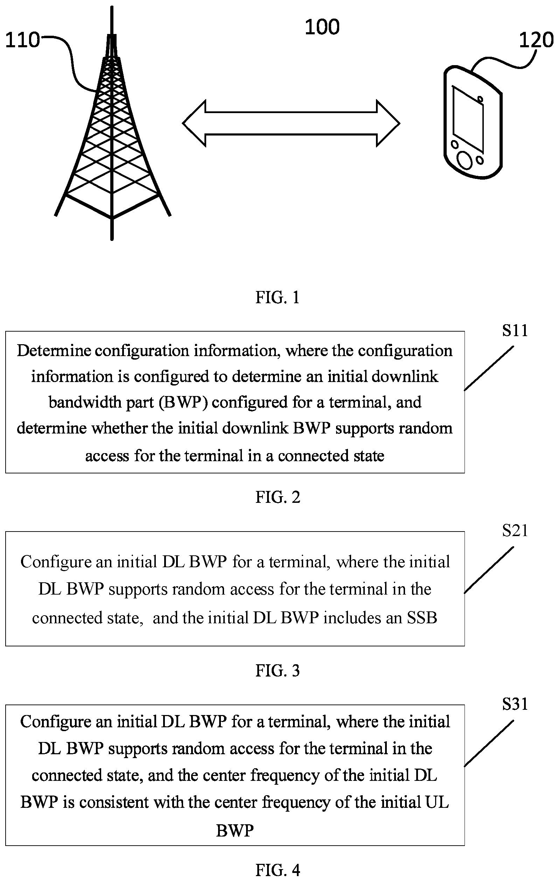

The random access method of the present disclosure may be applied in the wireless communication system shown in FIG. 1. As shown in FIG. 1, the wireless communication system 100 may include a network device 110 and a terminal 120. The network device 110 and the terminal 120 may communicate via wireless resources, such as transmitting and receiving corresponding information.

It is to be understood that the wireless communication system shown in FIG. 1 is for schematic illustration only, and that other network devices may be included in the wireless communication system, such as a core network device, a wireless relay device, and a wireless backhaul device may also be included, which are not pictured in FIG. 1. The embodiment of the present disclosure does not limit the number of network devices and terminals included in the wireless communication system.

It will be further understood that the wireless communication system of the embodiments of the present disclosure is a network providing a wireless communication function. The wireless communication systems can adopt different communication technologies, such as code division multiple access (CDMA), wideband code division multiple access (WCDMA), time division multiple access (TDMA), frequency division multiple access (FDMA), orthogonal frequency-division multiple access (OFDMA), single carrier FDMA (SC-FDMA), carrier sense multiple access with collision avoidance. Depending on the capacity, rate, delay and other factors of different networks can be categorized into a 2nd generation (2G) network, a 3rd generation (3G) network, 4th generation (4G) network or a future evolutionary network such as a 5th generation (5G) network, which can also be referred to as a new radio (NR) network. For ease of description, the present disclosure sometimes refers to a wireless communication network simply as a network.

Further, the network device 110 involved in the present disclosure may also be referred to as a wireless access network device. The wireless access network device may be a base station, an evolved node base station (evolved node B), a home base station, an access point (AP), a wireless relay node, a wireless return node, a transmission point (TP), or a transmission and reception point (TRP) , and the like, and may also be a next generation node B (gNB) in a NR system, alternatively, may be a component or a part of devices that constitutes a base station, etc. The network device may also be an on-board device when it is a vehicle-to-everything (V2X) communication system. It will be understood that the embodiments of the present disclosure do not limit the specific technology and the specific state of the device used for the network device.

Further, the terminal 120 involved in the present disclosure, which may also be referred to as a terminal device, a user equipment (UE), a mobile station (MS), a mobile terminal (MT), etc., is a device that provides voice and/or data connectivity to a user, e.g., the terminal may be a device with a wireless connectivity, a handheld device, an on-board device, etc. Currently, some examples of terminals include: a mobile phone, a pocket personal computer (PPC), a palmtop computer, a personal digital assistant (PDA), a laptop computer, a tablet computer, a wearable device, or an on-board device, etc. In addition, when it is a vehicle-to-everything (V2X) communication system, the terminal device can also be an on-board device. It will be understood that the embodiments of the present disclosure do not limit the specific technology and the specific state of the terminal.

The terminal involved in the embodiments of the present disclosure can be understood as a new type of terminal (e.g., a reduced capability (RedCap) terminal) designed in 5G NR. The new type of terminal is sometimes called a reduced capability UE, or a RedCap terminal, or a NR-lite. The embodiments of the present disclosure will be described below by taking a terminal called a RedCap terminal as an example.

**It** will be understood that the terminal involved in the embodiments of the present disclosure can be a RedCap terminal. The network device involved in the embodiments of the present disclosure may be a base station. Further, it will be understood that the embodiments of the present disclosure take the network device as a base station and the terminal as a RedCap terminal as an example. Of course, the network device can also be any other possible network device, and the terminal can also be any other possible terminal, which is not limited by the present disclosure.

This type of device is similar to an Internet of Thing (IoT) device in long term evolution (LTE) technology, and the 5G NR-lite typically needs to meet the following requirements:
low cost and complexity;
a certain degree of coverage enhancement; and
saving power.

Since the current NR system is designed for a high-end terminal with high speed and low latency, the current design cannot meet the above-mentioned requirements of the RedCap terminal. Therefore, it is necessary to reform the current NR system to meet the requirements of the RedCap terminal. For example, in order to meet the requirements of low cost and low complexity, the radio frequency (RF) bandwidth of NR-IoT can be limited, for example, to 5 MHz or 10 MHz, or the size of the buffer of the NR-lite can be limited, thus the size of each received transmission block can be limited. For saving power, the possible optimization direction is to simplify the communication process and reduce the number of times that the RedCap terminal detects the downlink control channel.

In the related art, considering the limitation of terminal bandwidth, time division duplexing (TDD) center frequency-alignment and overhead of SSB, it is necessary to configure a separate initial bandwidth part (Initial BWP) for the RedCap terminal. The Initial BWP includes an initial downlink bandwidth part (Initial DL BWP) and/or an initial uplink bandwidth part (Initial UL BWP).

In some cases, for the RedCap terminal in a connected state, the random access is initiated due to possible reasons such as timing advance (TA) out of step, beam failure, uplink resource request, etc. In some examples, one or more of the following events may be triggered. For example, radio resource control (RRC) connection reestablishment process; when the synchronization state of UL is "not synchronized", DL or UL data arrives during RRC_CONNECTED; when there is no physical uplink control channel (PUCCH) resource available for a scheduling request (SR), UL data arrives during RRC_CONNECTED; the scheduling request failed; RRC request (such as handover) during synchronous reconfiguration; establishing time calibration for auxiliary timing advance group (TAG); request other system information; beam fault recovery. Of course, more other possible events may be triggered, and the present disclosure is not limited.

In some cases, for the RedCap terminal in the connected state, the BWP during the random access can be selected in the following ways. For example, the terminal may first determine whether the monitored active UL BWP includes a random access resource. If the active UL BWP does not include the random access resource, the initial uplink BWP is preconfigured for the RedCap terminal, and the RedCap terminal can switch to the configured initial uplink BWP to perform the random access. Of course, in order to ensure the unity of uplink and downlink, when the RedCap terminal switches to the initial uplink BWP, it will also switch the downlink BWP. For example, if the initial downlink BWP is configured for the RedCap terminal in advance, the RedCap terminal can switch to the configured initial downlink BWP for reception.

Of course, in general, the initial UL BWP will be configured with a common search space (CSS), including, for example, a system information block (SIB), a scheduled search space (SS), a search space SIB1, a search space for scheduling other system information, a paging search space, and a search space for random access (ra-SearchSpace). It will be understood that the terminal can monitor the terminal-exclusive information in these search spaces, such as monitoring the exclusive downlink control information (DCI) scrambled by the cell-radio network temporary identifier (C-RNTI).

However, different RedCap terminals have different requirements for the SSB. For example, some RedCap terminals require that all BWP used must have the SSB. Some RedCap terminals can communicate with the network device on the BWP without SSB. This kind of RedCap terminal that communicates with the network device on the BWP without the SSB is a terminal with high capability. It can be considered that the ability to work on BWP without SSB is an optional ability, which is not supported by all RedCap terminals.

Of course, in other cases, if the initial DL BWP is used as a random access channel (RACH) but not for paging purposes, the initial DL BWP configured for the RedCap terminal may not have SSB. In the case of TDD, the initial DL BWP and the initial UL BWP may not have the same center frequency. When the RedCap terminal is switched from a paging channel (PACH) to an initial DL BWP, the exclusive information of the terminal may still be transmitted.

However, when the RedCap terminal is in the connected state and is switched to the initial UL BWP/initial DL BWP due to the RACH trigger, for the RedCap terminal that does not support the BWP without the SSB, communication failure may occur when the RedCap terminal communicates (such as transmitting exclusive information) due to the BWP being not configured with the SSB. In the TDD system, because the initial DL BWP and the initial UL BWP have different center frequencies, the communication will also fail.

Therefore, the present disclosure provides a random access method. The network device configures the terminal with configuration information, the configuration information is used to determine whether the configured initial downlink BWP supports the terminal in the connected state to perform the random access, so that the terminal can accurately determine whether to perform the random access by using the configured initial downlink BWP according to the configuration information, thereby communication failure is avoided.

It will be understood that the terminal involved in the embodiments of the present disclosure can be a RedCap terminal.

FIG. 2 is a flowchart illustrating a random access method according to an embodiment of the present disclosure. As shown in FIG. 2, the random access method may be applied in a network device. The method may include the following step S11.

At step S11, configuration information is determined. The configuration information is configured to determine an initial downlink Bandwidth Part (BWP) configured for a terminal, and determine whether the initial downlink BWP supports random access for the terminal in the connected state.

In one embodiment of the present disclosure, the configuration information configured by the network device for the terminal is configured to determine whether the initial downlink BWP supports random access for the terminal in the connected state such that the terminal can, based on the configuration information, accurately determine whether to perform random access by using the configured initial downlink BWP, so as to avoid communication failure.

In the random access method provided by the embodiments of the present disclosure, in some examples, the configuration information may be a predefined rule, and the network device may pre-store the predefined rule and directly determine the configuration information based on the predefined rule. Certainly, in some other examples, the configuration information may also be a signaling. The signaling may be determined and transmitted to the terminal by the network device. Alternatively, the signaling may be determined and transmitted to the network device by another device and the network device can then receive and determine the signaling and thus determine the configuration information. For example, the configuration information may be transmitted by another network device. The way of obtaining the configuration information is not limited in the present disclosure.

In the random access method provided by the embodiments of the present disclosure, in some examples, the network device may transmit the configuration information to the terminal after determining the configuration information such that the terminal can perform corresponding operation based on the configuration information.

In the random access method provided by the embodiments of the present disclosure, the configuration information determined by the network device may support random access for the terminal in the connected state.

In some examples, the configuration information may include an initial Downlink (DL) BWP configured for the terminal. The initial DL BWP may support random access for the terminal in the connected state. In some examples, an initial DL BWP configured for a RedCap terminal may be denoted as initial DL BWP-RedCap.

In the random access method provided by the embodiments of the present disclosure, the initial DL BWP supports random access for the terminal in the connected state. The network device may configure a Synchronization Signal and PBCH block (SSB) for the initial DL BWP.

FIG. 3 is a flowchart illustrating a random access method according to an embodiment of the present disclosure. As shown in FIG. 3, the random access method may be applied to a network device. The method may include the following step S21.

At step S21, an initial DL BWP is configured for a terminal, and the initial DL BWP supports random access for the terminal in the connected state. Further, the initial DL BWP includes an SSB.

In one embodiment of the present disclosure, the network device configures an SSB for the initial DL BWP and the RedCap terminal can complete random access on the initial DL BWP. Furthermore, it can be understood that when the network device configures the SSB for the initial DL BWP, the RedCap terminal especially requiring all BWPs to have the SSB can complete random access on the initial DL BWP without communication failure.

In the random access method provided by the embodiments of the present disclosure, the network device configures the SSB for the initial DL BWP when determining a set condition is satisfied.

For example, when the initial DL BWP includes a common search space for random access and at least one other common search space, the network device can configure the SSB for the initial DL BWP.

It can be understood that the other common search space is any possible common search space different from the common search space for random access.

In the random access method provided by the embodiments of the present disclosure, when the initial DL BWP includes the common search space for random access and at least one other common search space, the initial DL BWP configured by the network device includes the SSB, and the initial DL BWP supports random access for the terminal in the connected state. In this way, it is guaranteed that the RedCap terminal needing to transmit the exclusive information for the terminal can complete random access on the initial DL BWP. Especially for the RedCap terminal requiring all BWPs to have the SSB, there will not be communication failure.

In the random access method provided by the embodiments of the present disclosure, the network device may, under the set condition, configure a center frequency of the initial DL BWP to be consistent with a center frequency of an initial Uplink (UL) BWP configured for the terminal. For example, in a TDD system, the network device may configure the center frequency of the initial DL BWP to be consistent with the center frequency of the initial UL BWP configured for the terminal.

FIG. 4 is a flowchart illustrating a random access method according to an embodiment of the present disclosure. As shown in FIG. 4, the random access method may be applied in a network device. The method may include the following step S31.

At step S31, an initial DL BWP is configured for a terminal, and the initial DL BWP supports random access for the terminal in the connected state, and further, the center frequency of the initial DL BWP is consistent with the center frequency of the initial UL BWP.

In the random access method provided by the embodiments of the present disclosure, the network device configures the center frequency of the initial DL BWP to be consistent with the center frequency of the initial UL BWP so as to avoid the communication failure occurring to the terminal due to inconsistency of the center frequencies of the initial DL BWP and the initial UL BWP.

In the random access method provided by the embodiments of the present disclosure, when the initial DL BWP supports random access for the terminal in the connected state, the network device may also transmit exclusive information for the terminal by using the initial DL BWP. The exclusive information may also be referred to as terminal-exclusive information. For example, the terminal-exclusive information may be Downlink Control Information (DCI) scrambled by Cell Radio Network Temporary Identifier (C-RNTI). It can be understood that the exclusive information transmitted to the terminal by the network device may be transmitted on the common search space configured for the initial DL BWP.

In an example, in the random access method provided by the embodiments of the present disclosure, the initial DL BWP configured by the network device for the terminal supports random access for the terminal in the connected state. When the center frequency of the initial DL BWP is consistent with the center frequency of the initial UL BWP, the network device transmits the terminal-exclusive information by using the initial DL BWP.

In the random access method provided by the embodiments of the present disclosure, when the initial DL BWP can support random access for the terminal in the connected state, the configuration information configured by the network device may also be configured to determine the initial DL BWP is not configured to transmit the terminal-exclusive information. That is, the network device may, by the configuration information, notify the RedCap terminal that the network device will not transmit the terminal-exclusive information on the initial DL BWP. Therefore, the terminal does not need to monitor the initial DL BWP to determine whether the terminal-exclusive information is received. As a result, in the present disclosure, the communication failure resulting from inability of the RedCap terminal to transmit terminal-exclusive information can be avoided.

In the random access method provided by the embodiments of the present disclosure, the network device may determine the initial DL BWP is not configured to transmit the terminal-exclusive information when the initial DL BWP does not include the SSB. Thus, when the RedCap terminal switches to the initial DL BWP to perform random access, the terminal may not monitor the terminal-exclusive information in the common search space (CSS), for example, not monitor the DCI exclusive to the terminal in the CSS.

In this way, the initial DL BWP configured by the network device can guarantee that the RedCap terminal completes corresponding random access based on the initial DL BWP, without communication failure. Especially, the RedCap terminal requiring all BWPs to have the SSB can complete random access on the initial DL BWP, and may also not monitor the DCI exclusive to the terminal on the initial DL BWP, avoiding communication failure.

In the random access method provided by the embodiments of the present disclosure, the initial DL BWP configured by the network device for the terminal may not support random access for the terminal in the connected state.

It can be understood that, when the initial DL BWP configured by the network device for the terminal does not support that the RedCap terminal in the connected state performs random access, it can be avoided that the RedCap terminal especially requiring all BWPs to have the SSB encounters communication failure upon completing random access on the initial DL BWP.

In the random access method provided by the embodiments of the present disclosure, when determining the set condition is satisfied, the network device configures the initial DL BWP not to support random access for the terminal in the connected state.

In the random access method provided by the embodiments of the present disclosure, when the configured initial DL BWP does not include the SSB, the network device configures the initial DL BWP not to support random access for the terminal in the connected state.

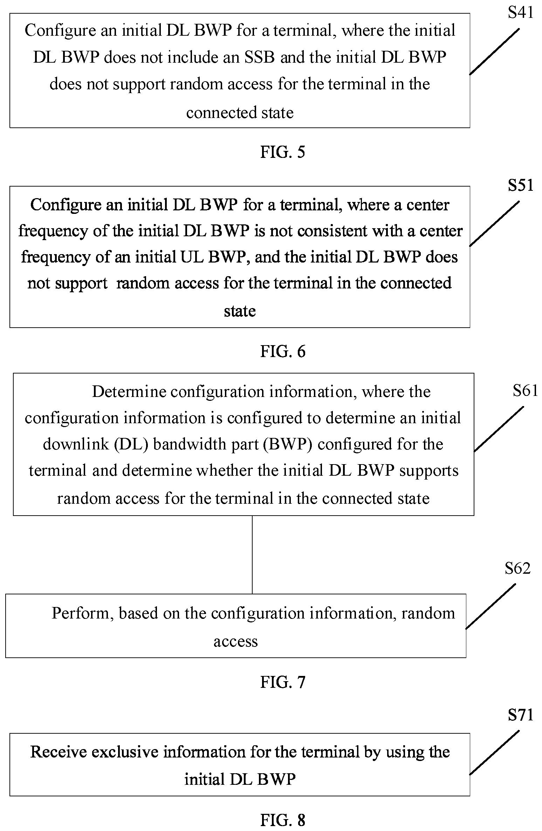

FIG. 5 is a flowchart illustrating a random access method according to an embodiment of the present disclosure. As shown in FIG. 5, the random access method may be applied in a network device. The method may include the following step S41.

At step S41, an initial DL BWP is configured for a terminal, where the initial DL BWP does not include an SSB and the initial DL BWP does not support random access for the terminal in the connected state.

In the random access method provided by the embodiments of the present disclosure, when the initial DL BWP configured by the network device does not include the SSB, the initial DL BWP is configured not to support that the RedCap terminal in the connected state performs random access. In this way, it can be avoided that the RedCap terminal especially requiring all BWPs to have the SSB encounters communication failure upon completing random access on the initial DL BWP not including the SSB.

In the random access method provided by the embodiments of the present disclosure, In a TDD system, when a center frequency of the initial DL BWP configured by the network device is not consistent with a center frequency of an initial UL BWP configured, the network device configures the initial DL BWP not to support random access for the terminal in the connected state.

FIG. 6 is a flowchart illustrating a random access method according to an embodiment of the present disclosure. As shown in FIG. 6, the random access method may be applied in a network device. The method may include the following step S51.

At step S51, an initial DL BWP is configured for a terminal, where a center frequency of the initial DL BWP is not consistent with a center frequency of an initial UL BWP, and the initial DL BWP does not support random access for the terminal in the connected state.

In the random access method provided by the embodiments of the present disclosure, in a TDD system, when the center frequency of the initial DL BWP configured by the network device is not consistent with the center frequency of the initial UL BWP, the network device configures the initial DL BWP not to support random access for the terminal in the connected state. In this way, it can be avoided that the RedCap terminal encounters communication failure upon performing random access at the time of inconsistency of the center frequencies of the initial DL BWP and the initial UL BWP.

In the random access method provided by the embodiments of the present disclosure, the configuration information determined by the network device may also be configured to determine an active BWP configured for the terminal. The active BWP includes a random access resource to perform random access for the terminal. The random access resource may be a physical random access channel (PRACH) resource. In other words, the active BWP monitored by the RedCap terminal includes the PRACH resource. It can be understood that the active BWP is another UL BWP different from the initial UL BWP.

In the random access method provided by the embodiments of the present disclosure, in an example, the network device configures an initial DL BWP not supporting random access for the terminal in the connected state, and an active BWP. The active BWP includes the random access resource to perform random access for the terminal.

In the random access method provided by the embodiments of the present disclosure, the active BWP is different from the initial DL BWP not supporting random access for the terminal in the connected state.

By configuring the initial DL BWP not supporting random access for the terminal in the connected state and the active BWP as above, the network device ensures the terminal can perform corresponding random access by using another BWP while not performing random access on the initial UL BWP, avoiding communication failure.

In the random access method provided by the embodiments of the present disclosure, the configuration information determined by the network device may be a signaling, or a predefined rule.

It will be understood that, in the random access method executed by the network device in the embodiments of the present disclosure, the network device configures a corresponding BWP for the terminal such that the terminal can perform corresponding random access operation based on the configured BWP, avoiding communication failure. In some cases, it can be avoided that the terminal in the connected state works on the BWP without SSB. In other cases, the communication failure of the terminal resulting from inconsistency of the center frequencies of the uplink and downlink BWPs can be avoided.

Based on the same idea, an embodiment of the present disclosure further provides a random access method executed by a terminal.

FIG. 7 is a flowchart illustrating a random access method according to an embodiment of the present disclosure. As shown in FIG. 7, the random access method may be applied in a terminal, for example, in a RedCap terminal. The method may include the following steps S61 to S62.

At step S61, configuration information is determined, where the configuration information is configured to determine an initial downlink (DL) bandwidth part (BWP) configured for the terminal and determine whether the initial DL BWP supports random access for the terminal in the connected state.

In some examples, the terminal may pre-store set configuration information and thus the terminal may directly determine the configuration information. Certainly, in some other examples, the configuration information may be transmitted by a network device and the terminal may receive and determine the configuration information. The way of obtaining the configuration information is not limited in the present disclosure.

At step S62, random access is performed based on the configuration information.

In one embodiment of the present disclosure, the terminal may complete corresponding random access based on the initial DL BWP for determining whether to support random access for the terminal in the connected state.

In the random access method provided in the embodiments of the present disclosure, in some examples, the configuration information may be a predefined rule and the terminal may pre-store the predefined rule and can directly determine the configuration information based on the predefined rule. Of course, in some other examples, the configuration information may also be a signaling which may be determined and transmitted to the terminal by the network device and then received from the network device by the terminal.

In the random access method provided in the embodiments of the present disclosure, the initial DL BWP may support random access for the terminal in the connected state. The terminal may perform random access by using the initial DL BWP.

In the random access method provided in the embodiments of the present disclosure, the initial DL BWP supports random access for the terminal in the connected state, and the initial DL BWP is configured with a Synchronization Signal and PBCH block (SSB).

In one embodiment of the present disclosure, the RedCap terminal completes random access on the initial DL BWP with the SSB. Especially, the RedCap terminal requiring all BWPs to have the SSB will not encounter communication failure.

In the random access method provided in the embodiments of the present disclosure, the initial DL BWP may include a common search space for random access and at least one other common search space, and the initial DL BWP is configured with the SSB, and hence, the terminal may perform random access by using the initial DL BWP. The other common search space is any possible common search space different from the common search space for random access. It is guaranteed that the RedCap terminal can transmit the terminal-exclusive information without communication failure.

In the random access method provided in the embodiments of the present disclosure, a center frequency of the initial DL BWP is consistent with a center frequency of an initial UL BWP configured for the terminal. For example, in a TDD system, the center frequency of the initial DL BWP is consistent with the center frequency of the initial UL BWP configured for the terminal. In this case, the communication failure of the terminal resulting from inconsistency of the center frequencies of the initial DL BWP and the initial UL BWP can be avoided.

FIG. 8 is a flowchart illustrating a random access method according to an embodiment of the present disclosure. As shown in FIG. 8, when the initial DL BWP supports random access for the terminal in the connected state, the method may include the following step S71.

At step S71, exclusive information for the terminal is received by using the initial DL BWP.

In an example, in the random access method provided by the embodiments of the present disclosure, the terminal in the connected state may perform random access based on the initial DL BWP. When the center frequency of the initial DL BWP is consistent with the center frequency of the initial UL BWP, the terminal receives the exclusive information for the terminal by using the initial DL BWP.

In some examples, the terminal may receive the exclusive information for the terminal (or called terminal-exclusive information) from the network device by using the initial DL BWP. For example, the terminal-exclusive information may be DCI scrambled by C-RNTI. It can be understood that the terminal may monitor the terminal-exclusive information on a common search space configured for the initial DL BWP such that the terminal can receive the terminal-exclusive information when monitoring the terminal-exclusive information.

In the above manner, the terminal may complete corresponding random access based on the configuration information, avoiding communication failure.

In the random access method provided by the embodiments of the present disclosure, when the initial DL BWP supports random access for the terminal in the connected state, the configuration information is further configured to determine the initial DL BWP is not configured to transmit the terminal-exclusive information. Therefore, the terminal can know the network device will not transmit the terminal-exclusive information on the initial DL BWP.

In the random access method provided by the embodiments of the present disclosure, when the initial DL BWP does not include an SSB, it is determined that the initial DL BWP is not configured to transmit the terminal-exclusive information. The terminal may not monitor the terminal-exclusive information in the CSS upon switching to the initial DL BWP to perform random access, for example, not monitor the DCI exclusive to the terminal in the CSS.

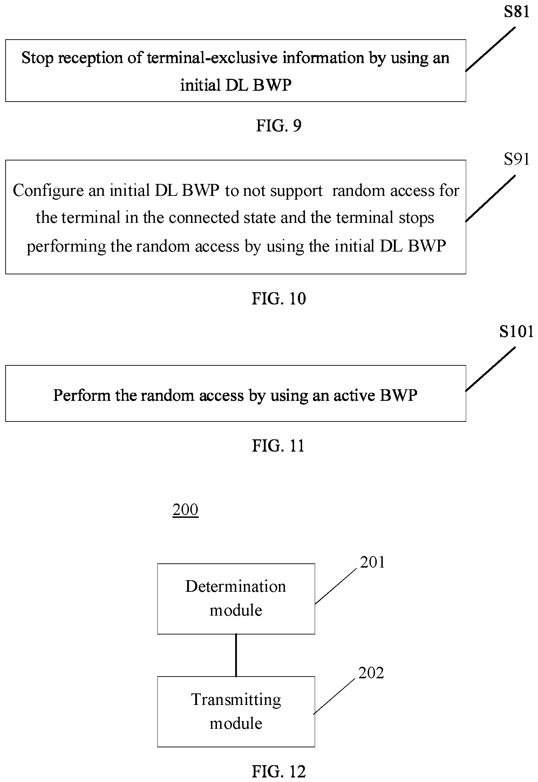

FIG. 9 is a flowchart illustrating a random access method according to an embodiment of the present disclosure. As shown in FIG. 9, when the initial DL BWP does not include the SSB, the method may include the following step S81.

At step S81, reception of terminal-exclusive information by using an initial DL BWP is stopped.

In an example, in the random access method provided by the embodiments of the present disclosure, when the initial DL BWP does not include an SSB, the terminal in the connected state performs random access based on the initial DL BWP and the terminal stops receiving the terminal-exclusive information by using the initial DL BWP.

In some examples, the terminal may stop receiving the terminal-exclusive information (also called terminal-exclusive information) from the network device by using the initial DL BWP. It can be understood that the terminal may stop monitoring the terminal-exclusive information on a common search space configured on the initial DL BWP, that is, when the initial DL BWP does not include an SSB and the terminal switches to the initial DL BWP, the terminal may not monitor the DCI exclusive to the terminal in the CSS.

In the above manner, the configured initial DL BWP may guarantee the RedCap terminal completes corresponding random access on the initial DL BWP without communication failure. The RedCap terminal especially requiring all BWPs to have the SSB may complete random access on the initial DL BWP and may not monitor the DCI exclusive to the terminal on the initial DL BWP, avoiding communication failure.

FIG. 10 is a flowchart illustrating a random access method according to an embodiment of the present disclosure. As shown in FIG. 10, the method may include the following step S91.

At step S91, an initial DL BWP is configured not to support random access for the terminal in the connected state and the terminal stops performing the random access by using the initial DL BWP.

In the random access method provided by the embodiments of the present disclosure, the configured initial DL BWP does not include an SSB and the configured initial DL BWP does not support random access for the terminal in the connected state. In this way, it can be avoided that the RedCap terminal especially requiring all BWPs to have the SSB encounters the communication failure at the time of completing random access on the initial DL BWP without the SSB.

In the random access method provided by the embodiments of the present disclosure, in a TDD system, a center frequency of the configured initial DL BWP is not consistent with a center frequency of the initial UL BWP configured for the terminal, and the configured initial DL BWP does not support random access for the terminal in the connected state. In this way, the communication failure of the RedCap terminal performing random access at the time of inconsistency of the center frequencies of the initial DL BWP and the initial UL BWP can be avoided.

In the random access method provided by the embodiments of the present disclosure, the configuration information may also be configured to determine an active BWP configured for the terminal. The active BWP includes a random access resource to perform random access for the terminal. The random access resource may be a PRACH resource. In other words, the active BWP monitored by the RedCap terminal includes the PRACH resource.

In the random access method provided by the embodiments of the present disclosure, the active BWP is another UL BWP different from the initial UL BWP. In some examples, FIG. 11 is a flowchart illustrating a random access method according to an embodiment of the present disclosure. As shown in FIG. 11, the method may include the following step S101.

At step S101, the random access is performed by using an active BWP.

By configuring an initial DL BWP not supporting random access for the terminal in the connected state and an active BWP as above, it can be guaranteed that the terminal can complete corresponding random access by using another BWP while not performing random access on the initial UL BWP, avoiding communication failure.

In some examples, the above-described configuration information may be a signaling or predefined rule.

It will be understood that in the random access method executed by the terminal in the embodiments of the present disclosure, the terminal can perform corresponding random access operation by using the configured BWP, avoiding communication failure. In some cases, it can be avoided that the terminal in the connected state works on the BWP without the SSB. In some other cases, the communication failure of the terminal resulting from inconsistency of the center frequencies of the uplink and downlink BWPs can be avoided.

It will be understood that the execution manner of the terminal is similar to that of the network device and thus reference may be made to the descriptions of the network device and no redundant descriptions are made in the present disclosure.

It will be understood by those skilled in the art that the various embodiments/implementations involved in the embodiments of the present disclosure may be used in conjunction with the foregoing embodiments or independently. Whether used independently or in conjunction with the foregoing embodiments, the principle of realization is similar. In the implementation of the present disclosure, some embodiment are described as embodiments used together. Of course, those skilled in the art can understand that such illustration is not a limitation of the embodiments of the present disclosure.

Based on the same conception, the embodiments of the present disclosure also provide a random access apparatus.

It will be understood that in order to realize the foregoing functions, the random access apparatus provided by the embodiments of the present disclosure includes corresponding hardware structures and/or software modules for performing various functions. Combining the units and algorithm steps of various examples disclosed in the embodiments of the present disclosure, the embodiments of the present disclosure can be realized in the form of hardware or a combination of hardware and computer software. Whether a function is performed as hardware or computer software driving hardware depends on the particular application and design constraints of the technical solution. Those skilled in the art can use different methods to realize the described functions for each specific application, but this realization should not be considered beyond the scope of the technical solutions of the embodiments of the present disclosure.

FIG. 12 is a schematic diagram illustrating a random access apparatus according to an embodiment of the present disclosure. As shown in FIG. 12, the apparatus 200 may be a base station, and the apparatus 200 may include a determination module 201.

The determination module 201 is configured to determine configuration information, where the configuration information is configured to determine an initial downlink bandwidth part (BWP) configured for a terminal, and determine whether the initial downlink BWP supports random access for the terminal in a connected state.

In an embodiment, the initial downlink BWP supports random access for the terminal in the connected state.

In an embodiment, the initial downlink BWP is configured with a synchronization signal and physical broadcast channel (PBCH) block (SSB).

In an embodiment, the initial downlink BWP includes a common search space for the random access and at least one other common search space, and the at least one other common search space is different from the common search space for the random access.

In an embodiment, a center frequency of the initial downlink BWP is consistent with a center frequency of an initial uplink BWP configured for the terminal.

In an embodiment, the apparatus 200 further includes: a transmitting module 202, configured to, by using the initial downlink BWP, transmit exclusive information for the terminal.

In an embodiment, the configuration information is further configured to determine that the initial downlink BWP is not configured to transmit the exclusive information for the terminal.

In an embodiment, the initial downlink BWP does not include the SSB.

In an embodiment, the initial downlink BWP does not support random access for the terminal in the connected state.

In an embodiment, the initial downlink BWP does not include the SSB.

In an embodiment, the center frequency of the initial downlink BWP is not consistent with the center frequency of the initial uplink BWP configured for the terminal.

In an embodiment, the configuration information is further configured to determine an active BWP configured for the terminal, and the active BWP includes a random access resource to perform the random access for the terminal.

In an embodiment, the active BWP is different from the initial downlink BWP.

In an embodiment, the configuration information may be a signaling or predefined rule.

With respect to the apparatus 200 in the embodiments, the specific manner in which each module performs an operation has been described in detail in the embodiments of the method, and will not be described in detail herein.

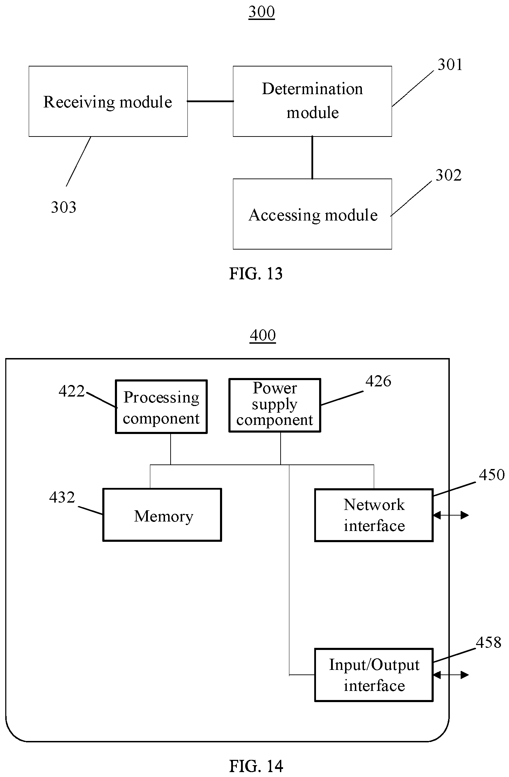

FIG. 13 is a schematic diagram illustrating a random access apparatus according to another embodiment of the present disclosure. As shown in FIG. 13, the apparatus 300 may be a terminal, for example, a RedCap terminal. The apparatus 300 may include a determination module 301 and an accessing module 302.

The determination module 301 is configured to determine configuration information, where the configuration information is configured to determine an initial downlink bandwidth part (BWP) configured for the terminal, and determine whether the initial downlink BWP supports random access for the terminal in a connected state.

The accessing module 302 is configured to, based on the configuration information, perform random access.

In an embodiment, the initial downlink BWP supports random access for the terminal in the connected state; where the accessing module 302 is further configured to: by using the initial downlink BWP, perform the random access.

In an embodiment, the initial downlink BWP is configured with a synchronization signal and physical broadcast channel (PBCH) block (SSB).

In an embodiment, the initial downlink BWP includes a common search space for the random access and at least one other common search space, and the at least one other common search space is different from the common search space for the random access.

In an embodiment, a center frequency of the initial downlink BWP is consistent with a center frequency of an initial uplink BWP configured for the terminal.

In an embodiment, the apparatus 300 further includes a receiving module 303, configured to: by using the initial downlink BWP, receive exclusive information for the terminal.

In an embodiment, the configuration information is further configured to determine the initial downlink BWP is not configured to transmit the exclusive information for the terminal.

In an embodiment, the initial downlink BWP does not include the SSB.

In an embodiment, the apparatus 300 further includes a receiving module 303, configured to: stop receiving the exclusive information for the terminal by using the initial downlink BWP.

In an embodiment, the initial downlink BWP does not support random access for the terminal in the connected state; where the accessing module is further configured to: stop performing random access by using the initial downlink BWP.

In an embodiment, the initial downlink BWP does not include the SSB.

In an embodiment, the center frequency of the initial downlink BWP is not consistent with the center frequency of the initial uplink BWP configured for the terminal.

In an embodiment, the configuration information is further configured to determine an active BWP configured for the terminal, and the active BWP includes a random access resource to perform the random access for the terminal.

In an embodiment, the active BWP is different from the initial downlink BWP; where the accessing module 302 is further configured to: by using the active BWP, perform the random access.

In an embodiment, the configuration information may be a signaling or predefined rule.

With respect to the apparatus 300 in the embodiments, the specific manner in which each module performs an operation has been described in detail in the embodiments of the method, and will not be described in detail herein.

FIG. 14 is a schematic diagram illustrating a random access device 400 according to an embodiment of the present disclosure. For example, the device 400 may be provided as a base station, or a server. Referring to FIG. 14, the device 400 includes a processing component 422, which further includes one or more processors, and memory resources represented by a memory 432 for storing instructions, such as an application program, that may be executed by the processing component 422. The application program stored in the memory 432 may include one or more modules each corresponding to a set of instructions. In addition, the processing component 422 is configured to execute the instructions to perform the random access method corresponding to the network device.

The device 400 may further include: a power supply component 426, configured to manage power supply of the device 400, a wired or wireless network interface 450, configured to connect the device 400 to a network, and an input/output (I/O) interface 458. The device 400 may operate an operating system based on an operating system stored in the memory 432, such as Windows ServerTM, Mac OS XTM, UnixTM, LinuxTM, FreeBSDTM or the like.

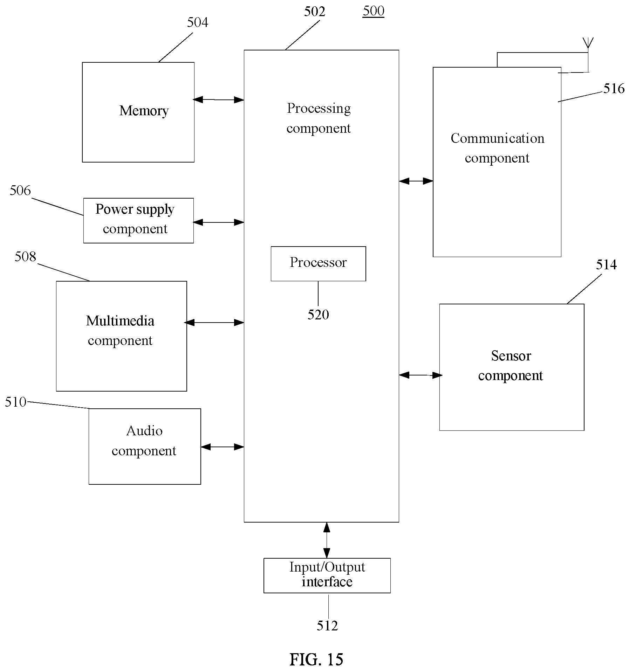

FIG. 15 is a schematic diagram illustrating another random access device 500 according to another embodiment of the present disclosure. For example, the device 500 may be a mobile phone, a computer, a digital broadcast terminal, a message transmitting and receiving device, a game console, a tablet device, a medical device, a fitness device and a personal digital assistant, a RedCap terminal and so on.

Referring to FIG. 15, the device 500 can include one or more of the following components: a processing component 502, a memory 504, a power supply component 506, a multimedia component 508, an audio component 510, an input/output (I/O) interface 512, a sensor component 514, and a communication component 516.

The processing component 502 generally controls overall operations of the device 500, such as operations associated with display, phone calls, data communications, camera operations, and recording operations. The processing component 502 may include one or more processors 520 to execute instructions to complete all or a part of the steps of the above methods. Further, the processing component 502 may include one or more modules to facilitate interaction between the processing component 502 and another component. For example, the processing component 502 may include a multimedia module to facilitate the interaction between the multimedia component 508 and the processing component 502.

The memory 504 is configured to store different types of data to support operations at the device 500. Examples of such data include instructions of any application program or method operable on the electronic device 500, contact data, telephone directory data, messages, pictures, videos, and the like. The memory 504 may be implemented by any type of volatile or non-volatile storage devices or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a disk or a CD.

The power supply component 506 provides power for different components of the electronic device 500. The power supply component 506 may include a power management system, one or more power sources, and other components associated with generating, managing and distributing power for the electronic device 500.

The multimedia component 508 may include a screen for providing an output interface between the device 500 and a user. In some embodiments, the screen may include a liquid crystal display (LCD) and/or a touch panel (TP). If the screen includes a touch panel, the screen may be implemented as a touch screen for receiving an input signal from a user. The touch panel may include one or more touch sensors for sensing a touch, a slide and a gesture on the touch panel. The touch sensor may not only sense a boundary of a touching or sliding movement, but also detect duration and pressure related to the touching or sliding operation. In some examples, the multimedia component 508 may include a front camera and/or a rear camera. When the device 500 is in an operation mode, such as a shooting mode or a video mode, the front camera and/or the rear camera may receive external multimedia data. Each of the front camera and the rear camera may be a fixed optical lens system or be of a focal length and a capability of an optical zoom.

The audio component 510 is configured to output and/or input an audio signal. For example, the audio component 510 may include a microphone (MIC). When the electronic device 500 is in an operating mode, such as a call mode, a recording mode and a speech recognition mode, the microphone is configured to receive an external audio signal. The received audio signal may be further stored in the memory 504 or sent via the communication component 516. In some embodiments, the audio component 510 also includes a speaker for outputting an audio signal.

The I/O interface 512 may provide an interface between the processing component 502 and peripheral interface modules. The above peripheral interface modules may include a keyboard, a click wheel, buttons and so on. Such buttons may include but not limited to: a home button, a volume button, a start button and a lock button.

The sensor component 514 may include one or more sensors for providing state assessments in different aspects for the device 500. For example, the sensor component 514 may detect the on/off state of the electronic device 500, and relative locations of components, such as a display and a small keyboard of the electronic device 500. The sensor component 514 may also detect a position change of the electronic device 500 or a component of the device electronic 500, the presence or absence of contact of a user with the electronic device 500, an orientation or acceleration/deceleration of the electronic device 500 and a temperature change of the electronic device 500. The sensor component 514 may include a proximity sensor configured to detect presence of a nearby object without any physical contact. The sensor component 514 may also include an optical sensor, such as a CMOS or CCD image sensor used in an imaging application. In some embodiments, the sensor component 514 may also include an acceleration sensor, a gyroscope sensor, a magnetic sensor, a pressure sensor, or a temperature sensor.

The communication component 516 is configured to facilitate wired or wireless communication between the electronic device 500 and other devices. The electronic device 500 may access a wireless network based on a communication standard, such as WIFI, 2G or 3G, or a combination thereof. In some embodiments, the communication component 516 may receive a broadcast signal or broadcast-related information from an external broadcast management system via a broadcast channel. In an example, the communication component 516 may also include a near field communication (NFC) module to facilitate short-range communications. For example, the NFC module may be implemented based on a radio frequency identification (RFID) technology, an infrared data association (IrDA) technology, an ultra wide band (UWB) technology, a bluetooth (BT) technology and other technologies.

In an example, the electronic device 500 may be implemented by one or more of an Application Specific Integrated Circuit (ASIC), a Digital Signal Processor (DSP), a Digital Signal Processor (DSPD), a Programmable Logic Device (PLD), a Field Programmable Gate Array (FPGA), a controller, a microcontroller, a microprocessor or other electronic components to perform the above method.

In an example, a non-transitory machine readable storage medium storing machine executable instructions is provided, such as the memory 504 storing instructions. The instructions may cause the processor 520 in the electronic device 500 to perform the above method. For example, the non-transitory computer readable storage medium may be a read-only memory (ROM), a random access memory (RAM), a CD-ROM, a magnetic tape, a floppy disk and an optical data storage device, etc.

The present disclosure determines configuration information for determining an initial downlink BWP configured for a terminal is configured to determine whether the initial downlink BWP supports random access for the terminal in the connected state such that the terminal can perform corresponding random access operation based on the configured BWP, avoiding communication failure.

It will be further understood that "plurality" in the present disclosure means two or more, and other quantifiers are similar. The wording "and/or" describes an association relationship of an associated object, and indicates that three relationships may exist, e.g., A and/or B, which may be expressed as: A alone, both A and B, and B alone. The character "/" generally indicates an "or" relationship between the related objects. The terms "a", "the" and "said" in their singular forms in the present application and the appended claims are also intended to include plurality, unless clearly indicated otherwise in the context.

It will be understood that the terms, such as "first", "second", etc., may be used to describe various information, such information should not be limited to these terms. These terms are used only to distinguish the same type of information from each other, and do not indicate a particular order or level of importance. Indeed, the expressions "first" and "second" are used interchangeably. For example, without departing from the scope of the present disclosure, first information may be referred as second information; and similarly, the second information may also be referred as the first information.

It will be further understood that the embodiments of the present disclosure, while describing operations in a particular order in the accompanying drawings, should not be construed as requiring that the operations be performed in the particular order shown or in a serial order, or that all of the operations shown be performed in order to obtain a desired result. In some embodiments, multitasking and parallel processing are also possible or may be advantageous.

After considering the specification and practicing the present disclosure, those skilled in the art would easily conceive of other implementations of the present disclosure. The present disclosure is intended to include any variations, uses and adaptive changes of the present disclosure. These variations, uses and adaptive changes follow the general principle of the present disclosure and include common knowledge or conventional technical means in the prior art not disclosed in the present disclosure.

It is to be understood that the present disclosure is not limited to the precise construction described herein and shown in the drawings, and that various modifications and changes may be made without departing from the scope thereof. The scope of the present disclosure is to be limited only by the appended claims.

## Claims

1. A random access method, performed by a network device and comprising:
determining configuration information, wherein the configuration information is configured to determine an initial downlink bandwidth part (BWP) configured for a terminal, and determine whether the initial downlink BWP supports random access for the terminal in a connected state.

2. The method of claim 1, wherein the initial downlink BWP supports random access for the terminal in the connected state.

3. The method of claim 2, wherein the initial downlink BWP is configured with a synchronization signal and physical broadcast channel (PBCH) block (SSB).

4. The method of claim 3, wherein the initial downlink BWP comprises a common search space for the random access and at least one other common search space, and the at least one other common search space is different from the common search space for the random access.

5. The method of any one of claims 2 to 4, wherein a center frequency of the initial downlink BWP is consistent with a center frequency of an initial uplink BWP configured for the terminal.

6. The method of any one of claims 2 to 5, further comprising:
transmitting exclusive information for the terminal by using the initial downlink BWP.

7. The method of claim 2, wherein the configuration information is further configured to determine that the initial downlink BWP is not configured to transmit the exclusive information for the terminal.

8. The method of claim 7, wherein the initial downlink BWP does not comprise the SSB.

9. The method of claim 1, wherein the initial downlink BWP does not support random access for the terminal in the connected state.

10. The method of claim 9, wherein the initial downlink BWP does not comprise the SSB.

11. The method of claim 9 or 10, wherein a center frequency of the initial downlink BWP is not consistent with a center frequency of the initial uplink BWP configured for the terminal.

12. The method of any one of claims 9 to 11, wherein the configuration information is further configured to determine an active BWP configured for the terminal, and the active BWP comprises a random access resource to perform the random access for the terminal.

13. The method of claim 13, wherein the active BWP is different from the initial downlink BWP.

14. A random access method, performed by a terminal and comprising:
determining configuration information, wherein the configuration information is configured to determine an initial downlink bandwidth part (BWP) configured for the terminal, and determine whether the initial downlink BWP supports random access for the terminal in a connected state; and
performing random access based on the configuration information.

15. The method of claim 14, wherein the initial downlink BWP supports random access for the terminal in the connected state;
wherein based on the configuration information, performing the random access comprises:
performing the random access by using the initial downlink BWP.

16. The method of claim 15, wherein the initial downlink BWP is configured with a synchronization signal and physical broadcast channel (PBCH) block (SSB).

17. The method of claim 16, wherein the initial downlink BWP comprises a common search space for the random access and at least one other common search space, and the at least one other common search space is different from the common search space for the random access.

18. The method of any one of claims 15 to 17, wherein a center frequency of the initial downlink BWP is consistent with a center frequency of an initial uplink BWP configured for the terminal.

19. The method of any one of claims 15 to 18, further comprising:
receiving exclusive information for the terminal by using the initial downlink BWP.

20. The method of claim 15, wherein the configuration information is further configured to determine the initial downlink BWP is not configured to transmit the exclusive information for the terminal.

21. The method of claim 20, wherein the initial downlink BWP does not comprise the SSB.

22. The method of claim 20 or 21, further comprising:
stopping receiving the exclusive information for the terminal by using the initial downlink BWP.

23. The method of claim 14, wherein the initial downlink BWP does not support random access for the terminal in the connected state;
wherein based on the configuration information, performing the random access comprises:
stopping performing random access by using the initial downlink BWP.

24. The method of claim 23, wherein the initial downlink BWP does not comprise the SSB.

25. The method of claim 23 or 24, wherein a center frequency of the initial downlink BWP is not consistent with a center frequency of the initial uplink BWP configured for the terminal.

26. The method of any one of claims 23 to 25, wherein the configuration information is further configured to determine an active BWP configured for the terminal, and the active BWP comprises a random access resource to perform the random access for the terminal.

27. The method of claim 26, wherein the active BWP is different from the initial downlink BWP;
wherein based on the configuration information, performing the random access further comprises:
by using the active BWP, performing the random access.

28. A random access apparatus, being a network device and comprising:
a determination module, configured to determine configuration information, wherein the configuration information is configured to determine an initial downlink bandwidth part (BWP) configured for a terminal, and determine whether the initial downlink BWP supports random access for the terminal in a connected state.

29. A random access apparatus, being a terminal and comprising:
a determination module, configured to determine configuration information, wherein the configuration information is configured to determine an initial downlink bandwidth part (BWP) configured for the terminal, and determine whether the initial downlink BWP supports random access for the terminal in a connected state; and
an accessing module, configured to, based on the configuration information, perform random access.

30. A random access device, comprising:
a processor; and
a memory storing instructions executable by the processor;
wherein the instructions, when executed by the processor, cause the processor to perform the random access method of any one of claims 1 to 13.

31. A random access device, comprising:
a processor; and
a memory storing instructions executable by the processor;
wherein the instructions, when executed by the processor, cause the processor to perform the random access method of any one of claims 14 to 27.

32. A non-transitory computer readable storage medium, storing instructions thereon, wherein the instructions, when executed by a processor of a network device, cause the processor to perform the random access method of any one of claims 1 to 13.

33. A non-transitory computer readable storage medium, storing instructions thereon, wherein the instructions, when executed by a processor of a mobile terminal, cause the processor to perform the random access method of any one of claims 14 to 27.
